# EUROPEAN PATENT SPECIFICATION

(11) **EP 0 461 219 B1**
(45) Date of publication and mention of the grant of the patent: **28.02.1996**
(21) Application number: 91900565.2
(22) Date of filing: 08.11.1990
(51) Int. Cl.: G06F 13/00

(54) **SERIAL INTERRUPT IN MICROCOMPUTERS**
SERIELLE UNTERBRECHUNG IN RECHNERN
INTERRUPTION EN SERIE DE MICRO-ORDINATEURS

(30) Priority: 02.01.1990 US 459507
(43) Date of publication of application: 18.12.1991
(73) Proprietor: MOTOROLA, INC., Schaumburg, IL 60196 (US)
(72) Inventor: ALLISON, Nigel, John, Austin, TX 78745 (US)
(74) Representative: Lupton, Frederick
(86) International application number: US9006463
(87) International publication number: WO9110193

(56) References cited:
- US-A- 4 268 904
- US-A- 4 320 467
- US-A- 4 463 445
- US-A- 4 482 949
- US-A- 4 495 569
- US-A- 4 631 669
- US-A- 4 648 029
- US-A- 4 716 523
- US-A- 4 734 882

## Description

### Field of the Invention

The present invention pertains to an improved method of interrupting operations in a microcomputer and more specifically to a method of arbitrating between modules requesting an interrupt in a microcomputer without requiring CPU operating time and time on the main bus.

### Background of the Invention

In general, microcomputers include a microprocessor or central processing unit (CPU) and a plurality of modules, which may be on a single chip or on a plurality of chips, connected together by means of a main bus, which includes address and data lines. The main bus is time shared by all of the modules. Whenever a module requires a fast response, it sends a signal known as an interrupt to the CPU. An interrupt causes the CPU to stop execution of its main program or operation and jump to a special program that responds to the needs of the interrupting module. Essentially, control of the main bus is said to be shifted to the interrupting module. Interrupts have a variety of priorities, depending upon their importance to the system and the urgency of the requested action.

Typically, an interrupt is initiated by a module applying an interrupt request signal to an interrupt request line, which is connected to the CPU. Once an interrupt request is sensed, the CPU starts an interrupt acknowledge sequence utilizing the main bus. The acknowledge sequence includes poling the modules to determine which module or modules requested the interrupt and what priority the requesting module or modules have. If the priority of at least one of the interrupting modules is higher than the priority of the operation currently being performed by the CPU, the CPU sends an interrupt acknowledge signal to the interrupting module and stacks, or stores, the operating information from the current operation. The major problem is that the CPU and the main bus are tied up during the interrupt acknowledge sequence and valuable operating time is used.

### Summary of the Invention

It is an object of the present invention to provide a new and improved method of interrupting a CPU in a microprocessor.

It is a further object of the present invention to provide a more efficient interrupt sequence in a microprocessor.

It is a further object of the present invention to provide a new and improved method of interrupting a microprocessor without using the main bus and additional CPU time for an interrupt acknowledge sequence.

It is a further object of the present invention to provide an improved microcomputer wherein interconnections are reduced, which simplifies the addition of modules to the system.

These and other objects are realized in a method and system as set out in claims 1 and 5. Since the CPU arbitrates directly with the requesting modules on the arbitration bus, no interrupt acknowledgement or interrupt acknowledge sequence are required.

### Brief Description of the Drawings

FIG.1 is a generalized block diagram of a microprocessor embodying the present invention;
FIG.2 is a block diagram, similar to FIG.1, of a specific embodiment of a microprocessor embodying the present invention;
FIG.3 is a diagram of an interrupt register from the microprocessor of FIG.2; and
FIG.4 is a timing diagram illustrating an interrupt request cycle in the microprocessor of FIG.2.

### Description of the Preferred Embodiments

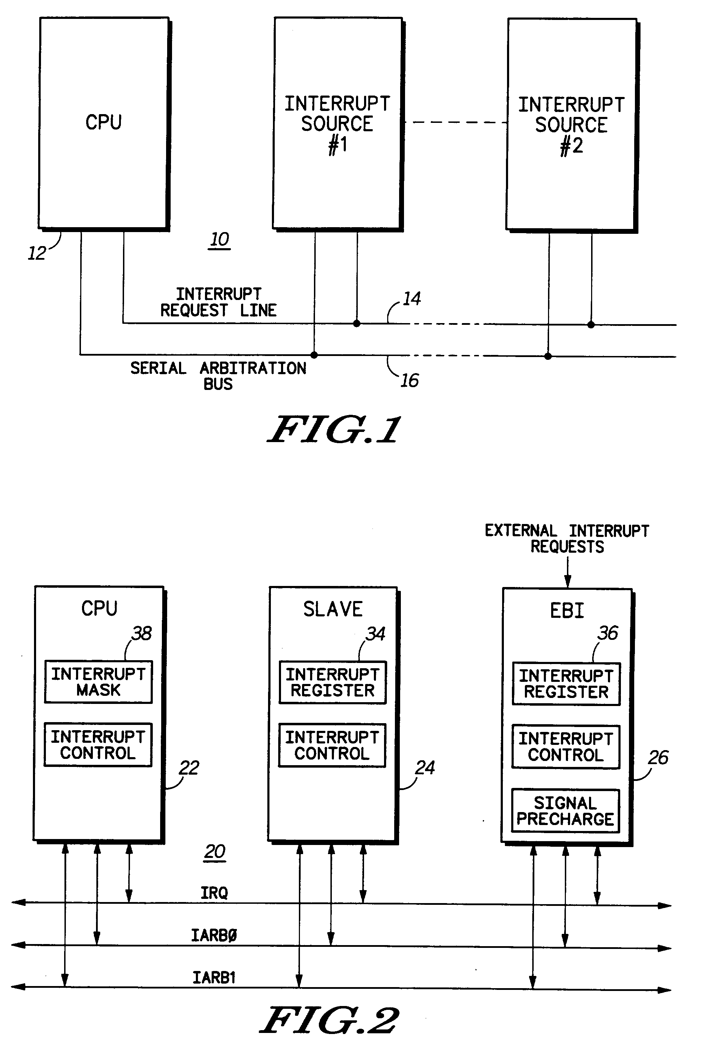

Referring specifically to FIG.1, a generalized block diagram of a microprocessor 10 is illustrated which embodies the present invention. Microprocessor 10 includes a CPU 12 and a plurality of modules #1 through #n. Each of the plurality of modules is coupled to CPU 12 through a main bus (not shown) which includes the usual data and address lines, and is capable of interrupting CPU 12 during normal operations. As is well known in the art, during an interrupt the interrupting module is said to have taken over control of the main bus and addresses and data are communicated between the interrupting module and CPU 12.

In microprocessor 10, CPU 12 and the plurality of modules are also connected by an interrupt request line 14 and a serial arbitration bus 16, which includes at least one line. Requests for an interrupt are communicated to CPU 12 over interrupt request line 14 and all arbitration for the interrupt is accomplished using the present novel method on serial arbitration bus 16 so that no use of the main bus is required and the interrupt acknowledge sequence is eliminated.

Referring to FIG.2, a specific embodiment, designated 20, of microprocessor 10 is illustrated. Microprocessor 20 includes a CPU 22, a slave module 24 and an external bus interface (EBI) 26, which is utilized to couple various external modules to CPU 22 through a main bus (not shown). CPU 22, slave module 24 and EBI 26 are also coupled through an interrupt request line IRQ and a pair of interrupt arbitration lines (serial arbitration bus) IARB0 and IARB1. Two lines are used in the serial arbitration bus in the present embodiment to allow for precharging of lines IARB0 and IARB1, as will be explained presently.

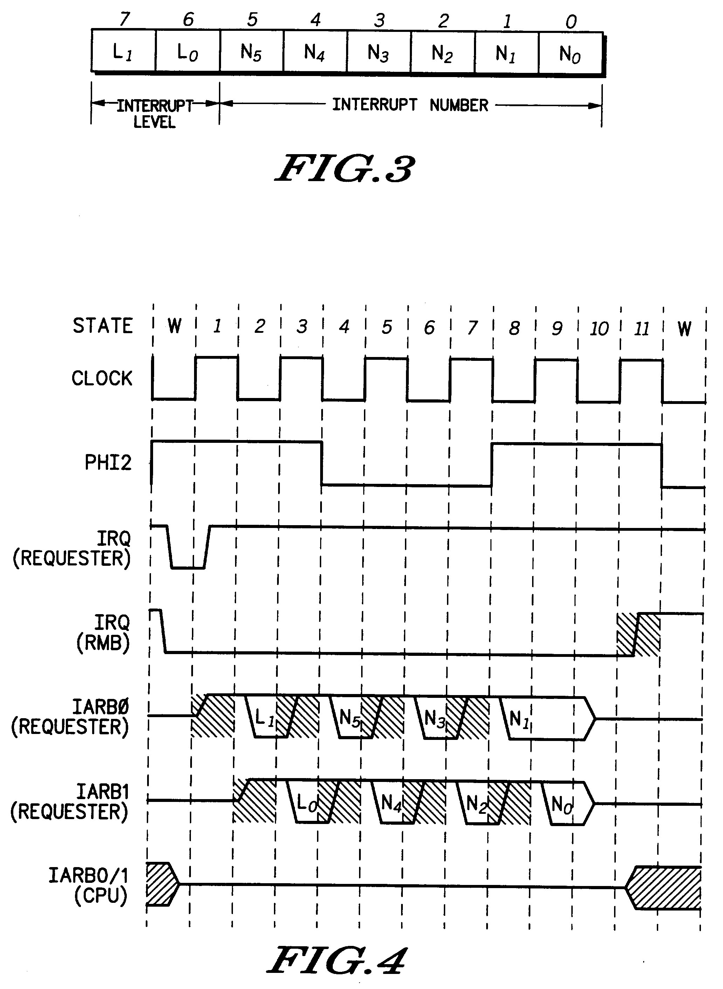

Slave module 24 and EBI 26 each include an eight bit interrupt register, designated 34 and 36 respectively, the contents of which are split into two fields as illustrated in FIG.3. The least significant six bits of interrupt registers 34 and 36 contain an interrupt number for the associated module, or interrupt request source. The interrupt number signifies the source's interrupt priority relative to all other interrupt request sources. The higher the value, the higher the priority. The interrupt number is only used if two or more interrupt requests simultaneously occur. In this embodiment the interrupt number is user programmable, but it may, optionally, be automatically configured according to, for example, the number of the channel that is initiating the interrupt request. The most significant two bits of interrupt registers 34 and 36 are used as an extension to the priority scheme and may be fixed or programmable, depending on the flexibility required. The two most significant bits provide four further levels of interrupt priority. The eight bit number in the interrupt register (both fields) will be referred to herein as the arbitration number. The eight bits of interrupt registers 34 and 36 are also used to determine the CPU vector that will be taken, assuming that the interrupt request is recognized by CPU 22. A total of 256 CPU interrupt vectors are possible, corresponding to each conceivable value of the interrupt register. Interrupt vectors are well understood by those skilled in the art and will not be elaborated upon herein.

CPU 22 includes an interrupt mask register 38, which is basically the same as interrupt registers 34 and 36. Interrupt mask register 38 always contains the interrupt level of the current operation of CPU 22 in the two most significant bits. The least significant six bits are always zeroed. Interrupt mask register 38 is used by CPU 22 in the arbitration scheme as described below. As is apparent, the specific numbers of bits and their locations in one or more registers such as interrupt registers 34 and 36 and interrupt mask register 38 may be varied widely in order to suit the requirements of a particular implementation of the present invention.

A module, or interrupting source, applies an interrupt signal to interrupt request line IRQ, thereby signaling that an interrupt is being requested. Each module or source must first check that no other source is currently making a request, before making a request, to insure that any arbitration cycles that are already underway will not be interfered with. If two or more sources simultaneously request an interrupt, arbitration occurs between the two or more sources and CPU 22, otherwise the arbitration only occurs between the single interrupting source and CPU 22. FIG.4 illustrates a typical timing diagram for an interrupt cycle.

An interrupt cycle begins with an interrupt request by one or more modules, or sources. An interrupt request is signaled by asserting interrupt request line IRQ on any falling edge of the CLOCK signal (referring to FIG.4). Interrupt request line IRQ is a logically wired-OR line which allows several modules to request an interrupt at the same time. Before interrupt request line IRQ can be asserted, the requesting modules must check to see if an interrupt arbitration cycle is already in progress, which is signified by interrupt request line IRQ already being asserted. Interrupt request line IRQ is sampled on every rising edge of the CLOCK signal, just prior to it being precharged, to perform this check. If an interrupt arbitration cycle is in progress then the requesting modules must hold off until interrupt request line IRQ is no longer asserted, at which time they may go ahead and each assert interrupt request line IRQ, after which it must remain asserted until the interrupt arbitration cycle is completed.

Upon detecting an interrupt request, CPU 22 and all requesting modules will immediately begin an interrupt arbitration cycle, however, CPU 22 will not begin its stacking operations, if any, until the current instruction has been completely executed. In this embodiment, arbitration is carried out using a two line, bit serial arbitration scheme and a programmable eight bit number (arbitration number) for each module capable of generating an interrupt. During interrupt arbitration, the arbitration number is driven in bit serial form, alternating between lines IARB0 and IARB1, which allows for precharging. Because of the nature of lines IARB0 and IARB1, a "one" bit in the arbitration number will generate a corresponding "low" level during interrupt arbitration with the most significant bit of the arbitration number being generated first. Because of the logically wired-OR bus, a low level effectively wins any contention. If contention is detected, i.e. driving high and detecting a low, the module that lost the arbitration must immediately stop driving its arbitration number on interrupt arbitration lines IARB0 and IARB1. At the end of the interrupt arbitration cycle, one interrupt source will remain and it is said to have 'won arbitration'. CPU 22 will use the arbitration number of this winning module to determine where to vector. After the last bit has been sent, the interrupt request on interrupt request line IRQ is negated allowing further interrupt cycles to occur.

CPU 22 effectively only attempts to 'win arbitration' over the interrupt priority level field (most significant two bits), since the interrupt number field (least significant six bits) is always zeroed. If CPU 22 does win then this means the requesting interrupt source was not of a sufficiently high priority level and so the requesting interrupt source will need to try again once the current interrupt request cycle has finished. The interrupt request is said to have been 'masked'. If CPU 22 loses arbitration then the requesting interrupt is of a sufficiently high priority level and so CPU 22 may immediately begin any stacking operations required in order to save its current state. The interrupt request has then not been masked. Typically, CPU 22 will also increment the value of the interrupt priority level field so as to mask further interrupts occurring at the same level.

Referring specifically to FIG.4, the following describes the activity that occurs during each interrupt cycle state.In FIG.4, stippled areas indicate precharge and crosshatched areas indicate a current interrupt mask level.

STATE(IW)-This is the idling or 'interrupt wait' state. This state is maintained as long as no interrupt cycle is taking place. CPU 22 drives interrupt arbitration lines IARB0 and IARB1 with a representation of its current interrupt mask level. If a module, that wishes to request an interrupt, observes that the current mask level is below that of the request then it may assert interrupt request line IRQ on the next rising edge of the CLOCK signal, so long as it is not already asserted. CPU 22 uses the interrupt request signal as a gating signal for the driving of interrupt arbitration lines IARB0 and IARB1, such that the assertion of interrupt request line IRQ will cause lines IARB0 and IARB1 to be three-stated and the negation of interrupt request line IRQ will cause lines IARB0 and IARB1 to be driven by CPU 22. The assertion of interrupt request line IRQ is also an indication to EBI 26 that it must begin its precharging duties for the interrupt cycle. This state is also entered following a reset or if any difference is detected between the driven bit value and the resultant bit value on lines IARB0 and IARB1 during STATE(12) through STATE(I9).

STATE(I1)-The requesting module (or modules) may negate the interrupt request, but it will remain asserted on line IRQ (RMB) due to holding devices within EBI 26. At this time EBI 26 precharges interrupt arbitration line IARB0.

STATE(I2)-The requesting module drives bit L1, of its interrupt register, onto interrupt arbitration line IARB0. EBI 26 precharges line IARB1.

STATE(I3)-The requesting module drives bit L0, of its interrupt register, onto line IARB1. EBI 26 precharges line IARB0.

STATE(I4)-The requesting module drives bit N5, of its interrupt register, onto line IARB0. EBI 26 precharges line IARB1.

STATE(I5)-The requesting module drives bit N4, of its interrupt register, onto line IARB1. EBI 26 precharges line IARB0.

STATE(I6)-The requesting module drives bit N3, of its interrupt register, onto line IARB0. EBI 26 precharges line IARB1.

STATE(I7)-The requesting module drives bit N2, of its interrupt register, onto line IARB1. EBI 26 precharges line IARB0.

STATE(I8)-The requesting module drives bit N1, of its interrupt register, onto line IARB0. EBI 26 precharges line IARB1.

STATE(I9)-The requesting module drives bit N0, of its interrupt register, onto line IARB1. Holding devices in EBI 26 maintain the previous level of line IARB0.

STATE(I10)-Holding devices in EBI 26 maintain the previous level of IARB0. The requesting module must no longer be driving either lines IARB0 or IARB1.

STATE(I11)-EBI 26 precharges line IRQ. This causes line IRQ to be negated, which causes CPU 22 to begin driving lines IARB0 and IARB1 with its mask level again.

STATE(IW)-Is reentered in preparation for the next interrupt request.

Thus, the interrupt structure of the specific embodiment illustrated supports a total of 128 interrupt vectors and 4 interrupt levels. Each interrupt source is assigned an arbitration number, by the user, which is then used to determine the module's relative priority should two or more sources simultaneously request an interrupt. The higher the arbitration number, the higher the effective priority of the interrupt source. This arbitration number is subsequently used as an offset into a vector table in CPU 22 so that the interrupt service routine may be directly entered, eliminating the need to poll all sources to determine which one caused the interrupt. All external interrupt sources are grouped together as internal interrupt sources through EBI 26. EBI 26 may group, prioritize and then resolve external interrupts in any way that the operator chooses, as long as the maximum number of interrupt sources is not exceeded.

The present structure and method completely eliminates the 'Interrupt Acknowledge Sequence" that usually signifies to an interrupt source whether it succeeded in interrupting the CPU or not. The interrupt source can tell if it was successful by observing whether it won arbitration over the interrupt priority level field. Also, separate interrupt arbitration and request lines are provided so that the entire interrupt arbitration cycle is resolved without using the main bus. It will of course be understood that the serial arbitration bus can be one or more lines, and two were illustrated in the preferred embodiment to allow for the precharging of the lines. In most MCU's interrupts are nested. Thus, to conserve power, when a module is serviced completely the CPU may drop the interrupt mask on the serial arbitration bus to the previous level of interrupt. In this fashion the modules do not continue to supply interrupt signals to the serial arbitration bus and power is saved. The arbitration number can be used to give a module a higher priority level and/or to indicate a specific function within the MCU. The present invention can be used at a chip or system level and only the serial arbitration bus and request line need to be connected to add modules, thus, reducing interconnections and simplifying the addition of modules to the system.

It should be noted that it is possible to eliminate the interrupt request line altogether by monitoring the serial arbitration line for activity and utilizing the detection of activity as an interrupt request.. The disadvantage of this system, though, is that it increases the latency of the system as the requesting source must wait a sufficient amount of time in order to ensure that the serial arbitration line is truly idle (some bit streams of data may resemble an idle line).

While I have shown and described specific embodiments of the present invention, further modifications and improvements will occur to those skilled in the art. We desire it to be understood, therefore, that this invention is not limited to the particular forms shown and we intend in the appended claims to cover all modifications that do not depart from the scope of this invention.

## Claims

1. A method of interrupting an operation and shifting control of the main bus of a microcomputer including a CPU and a plurality of modules operatively connected thereto through a main bus including data and address lines, said method comprising the steps of:
providing an arbitration bus including at least one line which is not a part of the main bus, connected to the CPU and each of the plurality of modules;
supplying from the CPU on the arbitration bus, interrupt priority level signals indicative of the priority level of the current operation in progress in the CPU;
supplying from the requesting module to the arbitration bus, interrupt priority level signals indicative of the priority level of the requesting module; and
controlling the main bus from the one of the CPU and requesting modules that has the highest priority level.

2. A method as claimed in claim 1 wherein the arbitration bus further comprises:
a pair of lines and the interrupt priority level signals each include a series of binary bits, and the supplying steps each include serially applying the series of binary bits to alternate ones of the pair of lines.

3. A method as claimed in claim 2 further comprising the step of precharging the one of the pair of lines not having a binary bit supplied thereto.

4. A method as claimed in claim 1 further comprising steps of:
sensing activity on the arbitration bus from each of the plurality of modules; and
waiting until sensed activity is completed before performing the step of supplying the interrupt priority level signals.

5. A microcomputer comprising:
a CPU programmed to service interrupts in its operations;
a plurality of modules coupled to said CPU by means of a main bus, each module being an interrupt source and having different interrupt priority levels;
an interrupt request line connected to said CPU and said plurality of modules for communicating interrupt requests from said plurality of modules to said CPU; and
a serial arbitration bus separate from the main bus and connected to said CPU for receiving thereon a priority level of a current operation and connected to said plurality of modules for receiving serially thereon the interrupt priority level of each module requesting an interrupt, and carrying all arbitration between said CPU and said plurality of modules.

6. A microcomputer as claimed in claim 5 further comprising:
an interrupt register coupled to the serial arbitration bus in each of the plurality of modules for containing the interrupt priority level of each of the plurality of modules; and
an interrupt mask register coupled to the serial arbitration bus in the CPU for containing the priority level of the current operation.

7. A microcomputer as claimed in claim 5 wherein the serial arbitration bus further comprises:
two arbitration lines and the microcomputer further includes precharging means attached to the two arbitration lines for precharging one of the two arbitration lines while the other is receiving a portion of an interrupt priority level thereon.

## Patentansprüche

1. Verfahren zur Unterbrechung einer Operation und Verlagerung der Steuerung des Hauptbusses eines Mikrocomputers mit einer CPU und einer Mehrzahl von Modulen, die damit über einen Hauptbus, der Daten-und Adressenleltungen enthält, funktionsmäßig verbunden ist, wobei das Verfahren die Schritte umfaßt:
Bereitstellen eines Arbitrationsbusses, der wenigstens eine Leitung, die kein Teil des Hauptbusses ist, enthält und mit der CPU und jedem der Mehrzahl von Modulen verbunden ist;
Zuführen von der CPU auf dem Arbitratlonsbus Unterbrechungs-Prioritätsstufensignale, die die Prioritätsstufe der augenblicklichen Operation angeben, die in der CPU im Gange ist;
Zuführen von dem anfordernden Modul dem Arbitrationsbus Unterbrechungs-Prioritätsstufensignale, die die Prioritätsstufe des anfordernden Moduls angeben, und
Steuern des Hauptbusses von dem einen der CPU und den anfordernden Modulen, der die höchste Prioritätsstufe besitzt.

2. Verfahren nach Anspruch 1, bei dem der Arbitrationsbus weiter umfaßt:
ein Leitungspaar, und die Unterbrechungs-Prioritätsstufensignale je eine Serie von binären Bits umfassen und die zuführenden Schritte je das serielle Anlegen der Serie von binären Bits an abwechselnde des Paares von Leitungen umfassen.

3. Verfahren nach Anspruch 2, das weiter den Schritt des Vorladens der einen des Paares von Leitungen umfaßt, der kein binäres Blt zugeführt wird.

4. Verfahren nach Anspruch 1, das weiter die Schritte umfaßt:
Erfassen der Aktivität auf dem Arbitrationsbus von jedem der Mehrzahl von Modulen und
Warten, bis die erfaßte Aktivität beendet ist, bevor der Schritt des Zuführens der Unterbrechungs-Prioritätsstufensignale ausgeführt wird.

5. Mikrocomputer, der umfaßt:
eine CPU, die programmiert ist, um in ihren Operationen Unterbrechungen zu bedienen;
eine Mehrzahl von Modulen, die mit der CPU mittels eines Hauptbusses verbunden sind, wobei jedes Modul eine Unterbrechungsquelle ist und über unterschiedliche Unterbrechungs-Prioritätsstufen verfügt;
eine Unterbrechungs-Anforderungsleitung, die mit der CPU und der Mehrzahl von Modulen verbunden ist und Unterbrechungsanforderungen von der Mehrzahl von Modulen an die CPU übermittelt, und
einen seriellen Arbitrationsbus, der von dem Hauptbus getrennt und mit der CPU verbunden ist, um darauf eine Prioritätsstufe einer momentanen Operation zu empfangen, und mit der Mehrzahl von Modulen verbunden ist, um die Unterbrechungs-Prioritätsstufen jedes Moduls, das eine Unterbrechung anfordert, seriell darauf zu empfangen und die ganze Arbitration zwischen der CPU und der Mehrzahl von Modulen zu befördern.

6. Mikrocomputer nach Anspruch 5, der weiter umfaßt:
ein Unterbrechungsregister, das mit dem seriellen Arbitrationsbus in jedem der Mehrzahl von Modulen verbunden ist und die Unterbrechungs-Prioritätsstufe jedes der Mehrzahl von Modulen enthält, und
ein Unterbrechungs-Maskenregister, das mit dem seriellen Arbitrationsbus in der CPU verbunden ist und die Prioritätsstufe der momentanen Operation enthält.

7. Mikrocomputer nach Anspruch 5, bei dem der Arbitrationsbus weiter umfaßt:
zwei Arbitrationsleitungen, und der Mikrocomputer weiter eine mit den zwei Arbitrationsleitungen verbundene Vorladeeinrichtung enthält, um eine der zwei Arbitrationsleitungen vorzuladen, während die andere einen Teil einer Unterbrechungs-Prioritätsstufe darauf empfängt.

## Revendications

1. Procédé permettant d'interrompre une opération et de déplacer la commande du bus principal d'un micro-ordinateur comportant une unité centrale de traitement, ou CPU, et une pluralité de modules qui lui sont fonctionnellement connectés par l'intermédiaire dudit bus principal, lequel comporte des lignes de données et des lignes d'adresses, ledit procédé comprenant les opérations suivantes :
prévoir un bus d'arbitrage comportant au moins une ligne qui ne fait pas partie du bus principal, le bus d'arbitrage étant connecté à la CPU et à chaque module de la pluralité de modules ;
fournir, en provenance de la CPU, sur le bus d'arbitrage, des signaux de niveau de priorité d'interruption indicatifs du niveau de priorité de l'opération courante ayant lieu dans la CPU ;
fournir, en provenance du module demandeur, sur le bus d'arbitrage, des signaux de niveau de priorité d'interruption indicatifs du niveau de priorité du module demandeur; et
commander le bus principal à partir de l'élément, pris entre la CPU et les modules demandeurs, qui possède le niveau de priorité le plus élevé.

2. Procédé selon la revendication 1, où le bus d'arbitrage comprend en outre une paire de lignes et les signaux de niveau de priorité d'interruption comportent chacun une série de bits binaires, et où les opérations de fourniture de signaux comportent chacune l'application, sous forme série, de la série de bits binaires aux lignes alternées de la paire de lignes.

3. Procédé selon la revendication 2, comprenant en outre l'opération consistant à précharger la ligne de la paire de lignes à laquelle un bit binaire n'est pas fourni.

4. Procédé selon la revendication 1, comprenant en outre les opérations suivantes :
détecter l'activité ayant lieu sur le bus d'arbitrage en provenance de chaque module de la pluralité de modules ; et
attendre que l'activité détectée soit achevée pour effectuer l'opération consistant à fournir les signaux de niveau de priorité d'interruption.

5. Micro-ordinateur comprenant :
une unité centrale de traitement, ou CPU, programmée pour prendre en charge des interruptions de ses opérations ;
une pluralité de modules couplés à ladite CPU par l'intermédiaire d'un bus principal, chaque module étant une source d'interruptions et ayant différents niveaux de priorité d'interruption ;
une ligne de demande d'interruption connectée à ladite CPU et à ladite pluralité de modules afin de communiquer à ladite CPU des demandes d'interruption provenant de ladite pluralité de modules ; et
un bus d'arbitrage série, qui est séparé du bus principal et est connecté à ladite CPU, afin de recevoir un niveau de priorité associé à une opération courante, et à ladite pluralité de modules, afin de recevoir en série le niveau de priorité d'interruption de chaque module demandant une interruption, et qui effectue la totalité de l'arbitrage entre ladite CPU et ladite pluralité de modules.

6. Micro-ordinateur selon la revendication 5, comprenant en outre :
un registre d'interruptions, couplé au bus d'arbitrage série, qui est placé dans chaque module de la pluralité de modules et sert à contenir le niveau de priorité d'interruption de chaque module de la pluralité de modules ; et
un registre de masque d'interruption, couplé au bus d'arbitrage série, qui est placé dans la CPU et sert à contenir le niveau de priorité de l'opération courante.

7. Micro-ordinateur selon la revendication 5, où le bus d'arbitrage série comprend en outre deux lignes d'arbitrage, et où le micro-ordinateur comporte en outre un moyen de précharge fixé aux deux lignes d'arbitrage afin de précharger l'une des deux lignes d'arbitrage pendant que l'autre est en train de recevoir une partie d'un niveau de priorité d'interruption.
